# EUROPÄISCHE PATENTANMELDUNG

(11) **EP 4 703 545 A1**
(43) Veröffentlichungstag der Anmeldung: **04.03.2026**
(21) Anmeldenummer: 25198478.7
(22) Anmeldetag: 27.08.2025
(51) Int. Cl.: E05F 1/16, E05F 5/00

(54) **DÄMPFER EINER SELBSTEINZUGSEINRICHTUNG FÜR EIN BEWEGBARES MÖBELTEIL**

(30) Priorität: 29.08.2024 DE 102024124756
(71) Anmelder: Druck- und Spritzgußwerk Hettich GmbH & Co. KG, 35066 Frankenberg (DE)
(72) Erfinder: WASCHK, Stefan, 35094 Lahntal-Caldern (DE)
(74) Vertreter: Dantz, Jan Henning

(57) **Zusammenfassung**

Ein Dämpfer für eine Selbsteinzugseinrichtung für ein Möbelteil, mit einem Gehäuse (1), in dem ein Kolben (2) mit einer Kolbenstange (3) und einem Kolbenkopf (4) axial verschiebbar gehalten ist, wobei die Kolbenstange (3) mittels eines an dem dem Kolbenkopf (4) gegenüberliegenden Ende vorgesehenen Anschlusselements (5) mit der Selbsteinzugseinrichtung verbindbar ist, ist so ausgebildet, dass in den dem Anschlusselement (5) der Kolbenstange (3) zugewandten Endbereich des Gehäuses (1) eine mit dem Gehäuse (1) verrastete Hülse (10) eingefügt ist, die die Kolbenstange (3) umfänglich umschließt und eine Rastverbindung zur Selbsteinzugseinrichtung bildet.

## Beschreibung

Die Erfindung betrifft einen Dämpfer für eine Selbsteinzugseinrichtung für ein bewegbares Möbelteil nach dem Oberbegriff des Anspruchs 1.

Derartige Dämpfer sind als Bestandteil eines Selbsteinzugs hinlänglich bekannt. Dabei ist der Selbsteinzug beispielsweise an einer Auszugsführung gehalten, mittels der zwei Möbelteile relativ zueinander in eine Endlage bewegbar sind.

Zur Bereitstellung unterschiedlicher Selbsteinzugseinrichtungen, jeweils entsprechend den gestellten unterschiedlichen Anforderungen, werden eine Vielzahl verschiedener Selbsteinzugseinrichtungen, hier insbesondere mit verschiedenen Dämpfern bereitgestellt, was naturgemäß mit einem erheblichen Aufwand verbunden ist, sowohl hinsichtlich der Fertigung wie auch hinsichtlich einer Lagerhaltung. In jedem Fall gehen damit erhebliche Kosten einher, die den stets geforderten Ansprüchen nach einer Kostenminimierung entgegenstehen.

Überdies sind die bekannten Dämpfer in ihren Anschlussmaßen jeweils auf eine bestimmte Selbsteinzugseinrichtung abgestimmt, so dass eine Vielzahl solcher Selbsteinzugseinrichtungen und Dämpfer bereitgehalten werden müssen. Weiter ist die Anbindung an die Auszugsführung ebenfalls nur mit einem erheblichen Aufwand zu erreichen.

Ein gattungsgemäßer Dämpfer ist beispielsweise in der US 2011/0278117 A1 offenbart. Dieser Fluid-Dämpfer ist so konzipiert, dass ein permanenter Volumenausgleich nicht möglich ist, sondern dieser erst zum Ende der Dämpfung einsetzt.

Ein Dämpfer gemäß der Gattung ist ebenfalls in der EP 4 178 395 B1 thematisiert.

Der Erfindung liegt die Aufgabe zugrunde, einen Dämpfer der gattungsgemäßen Art so weiterzuentwickeln, dass sein Einsatzbereich erweitert und seine Herstellungs- und Montagekosten gesenkt werden.

Diese Aufgabe wird durch einen Dämpfer mit den Merkmalen des Anspruchs 1 gelöst.

Zunächst einmal ist als besonderer Vorteil hervorzuheben, dass die Anzahl der zum Einsatz kommenden Dämpfervarianten reduziert werden kann. Dabei können fertigungstechnisch die betriebsseitig vorhandenen Vorrichtungen genutzt werden, so dass auf zusätzliche maschinelle Investitionen zur Herstellung des Dämpfers verzichtet werden kann.

Funktional dient hierbei eine Hülse sowohl zum Verschließen des Dämpfers wie auch als Schnittstelle zu vorhandenen Selbsteinzugseinrichtungen, insbesondere von Auszugsführungen, wodurch gewährleistet ist, dass bei einer Montage der vorhandene Dämpfer ohne Änderungen der beteiligten Bauteile eingesetzt werden kann.

Durch die Verrastung der Hülse mit dem Gehäuse wird eine feste Verbindung erreicht. Dabei können als Rastmittel außenseitig Rastzungen an der Hülse ausgebildet sein, die in entsprechende Ausnehmungen des Gehäuses eingreifen. D.h., das Einführen der Hülse in das Gehäuse erfolgt sehr leichtgängig, während ein Herausziehen der Hülse aus dem Gehäuse nur mit einem erheblichen Kraftaufwand möglich ist.

Der Einsatz des neuen Dämpfers erfolgt nunmehr ohne bauliche Veränderungen der Selbsteinzugseinrichtung, so dass der neue Dämpfer ohne Veränderung der beteiligten, im Regelfall vorhandenen Bauteile installiert werden kann.

Die Innenseite der Hülse ist so ausgebildet, dass ein Korrespondenzelement der Selbsteinzugseinrichtung eingeschoben und ebenfalls darin durch Rastmittel fixiert ist. Diese Rastmittel können vergleichbar denen ausgebildet sein, mit denen die Hülse im Gehäuse gehalten ist

Die Herstellung des neuen Dämpfers erfolgt derart, dass die Hülse vollautomatisch in ein Dämpfungsgehäuse eingefügt werden kann, woraus sich naturgemäß weitere Kostenvorteile gegenüber dem aus dem Stand der Technik bekannten Dämpfer ergeben.

Diesem Vorteil kommt insofern eine besondere Bedeutung zu als dass diese Dämpfer in Selbsteinzugseinrichtungen als Serienbauteile in großen Stückzahlen zum Einsatz kommen.

Nach einem weiteren Gedanken der Erfindung ist der axial verschiebliche Kolben im Dämpfer verdrehsicher im Gehäuse gehalten, wobei das Gehäuse vorzugsweise zylindrisch ausgebildet ist, mit einem der Hülse gegenüberliegenden geschlossenen Boden.

Zur Verdrehsicherung des Kolbens ist die Mantelinnenfläche des Gehäuses im Querschnitt profiliert, während der Kolbenkopf, der an der Mantelinnenfläche anliegt, außenseitig daran angepasste Profilierungen aufweist.

Eine Profilierung kann beispielsweise dadurch gebildet werden, dass die Mantelinnenfläche des Gehäuses mit axialen Rippen versehen ist, die in daran angepasste Längsnuten des Kolbenkopfes einliegen.

Denkbar ist auch eine Innenprofilierung, die sich als unrunde Mantelinnenfläche und eine daran angepasste Außenfläche des Kolbenkopfes ergibt.

Dabei kann diese Form beispielsweise als, im Querschnitt gesehen, Abflachungen ausgebildet sein, die als Vertiefungen der Mantelinnenfläche des Gehäuses und in Form von Stegen der Außenfläche des Kolbenkopfes vorliegen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Dämpfer nach der Erfindung in einer geschnittenen Seitenansicht
- Figur 2: den Dämpfer nach Figur 1 in einer Explosionsdarstellung
- Figur 3: eine Einzelheit des Dämpfers, perspektivisch dargestellt
- Figur 4: eine Vorderansicht eines Teils des Dämpfers
- Figur 5: den Teil des Dämpfers nach Figur 4 in einer perspektivischen Ansicht.
- Figur 6a - 6d: Montageschritte eines erfindungsgemäßen Dämpfers an einer Selbsteinzugseinrichtung
- Figur 7: einen Längsschnitt der montierten Selbsteinzugseinrichtung mit Dämpfer im Bereich der Hülse

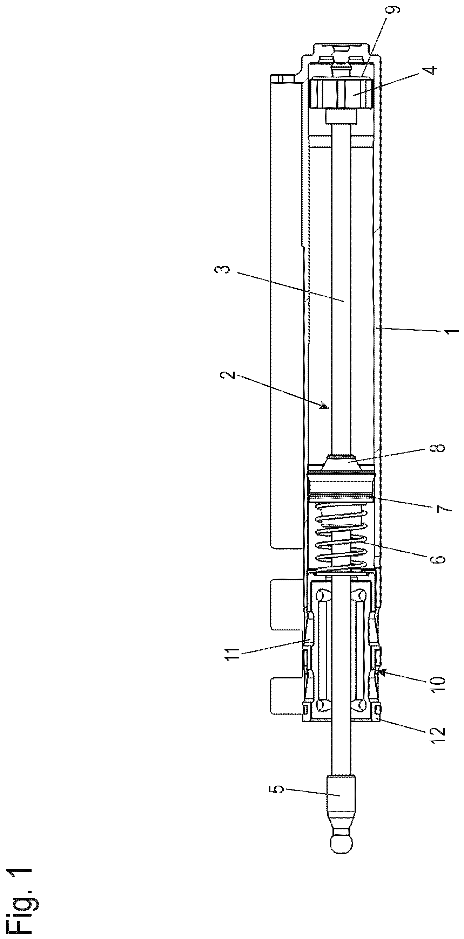

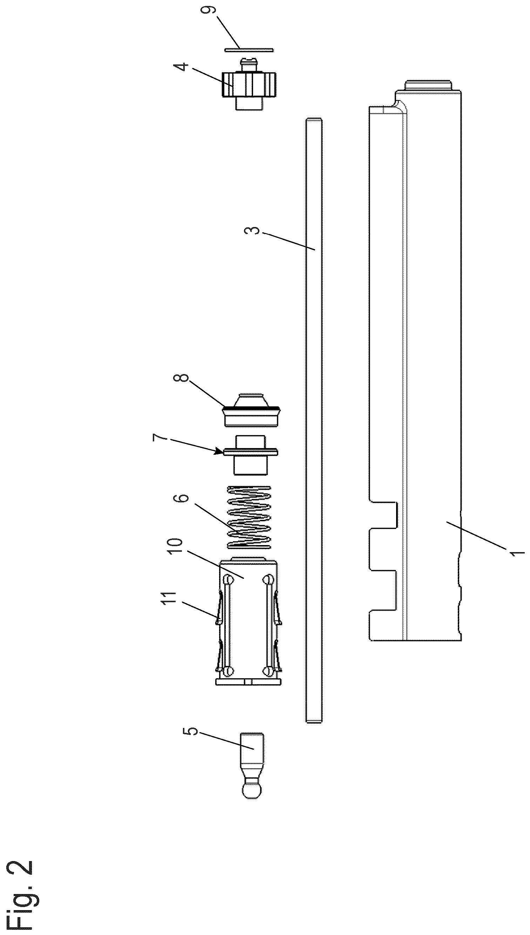

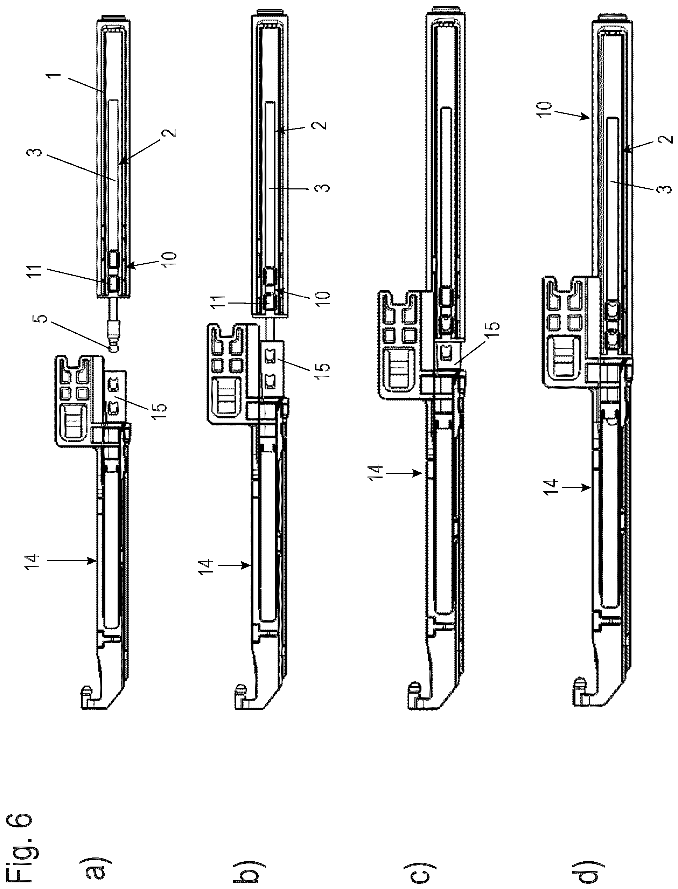

In den Figuren 1 und 2 ist ein Dämpfer für eine Selbsteinzugseinrichtung 14 (Figur 6) für ein Möbelteil abgebildet, mit einem Gehäuse 1, in dem ein Kolben 2 axial verschiebbar gehalten ist.

Dieser Kolben 2 weist eine Kolbenstange 3 und einen Kolbenkopf 4 auf, ebenso wie auf der dem Kolbenkopf 4 gegenüberliegenden Seite ein Anschlusselement 5, das in montierter Stellung mit einem Mitnehmer der Selbsteinzugseinrichtung 14 verbunden ist.

Gemäß der Erfindung ist in dem, dem Anschlusselement 5 der Kolbenstange 3 zugewandten, Endbereich des Gehäuses 1 eine mit dem Gehäuse 1 verrastete Hülse 10 eingefügt, die die Kolbenstange 3 umfänglich umschließt.

Zur Verrastung der Hülse 10 mit dem Gehäuse 1 weist die Hülse 10 harpunenstegartige Rastzungen 11 auf, die in entsprechende Ausnehmungen der Mantelinnenseite des Gehäuses 1 derart eingreifen, dass die Hülse 10 entgegen der Einschubrichtung fixiert ist, während das Einschieben der Hülse 10 in das Gehäuse 1 leichtgängig ist.

Dabei wird das Einfedern der Rastzungen 11 durch Materialschwächungen in der Hülse 10, im Beispiel durch axial verlaufende Aussparungen 16, unterstützt. Diese federnde Wirkung wird nach der Montage an der Selbsteinzugseinrichtung 14 durch das Einführen einer Verbindungsbuchse 15 wieder aufgehoben, so dass ein Lösen der Hülse 10 aus dem Gehäuse 1 nicht mehr möglich ist.

Zum Volumenausgleich der Kolbenstange 3 ist eine Dichtung 8 mit einer Druckfeder 6 vorgesehen, die sich einerseits an dem, dem Anschlusselement 5 abgewandten, Bodenbereich der Hülse 10 und andererseits an einem Führungselement 7 der Kolbenstange 3 abstützt.

Zur Einschubbegrenzung der Hülse 10 in das Gehäuse 1 weist die Hülse 10 einen umlaufenden, radial nach außen gerichteten Kragen 12 auf, der sich an der zugeordneten Stirnseite des Gehäuses 1 abstützt.

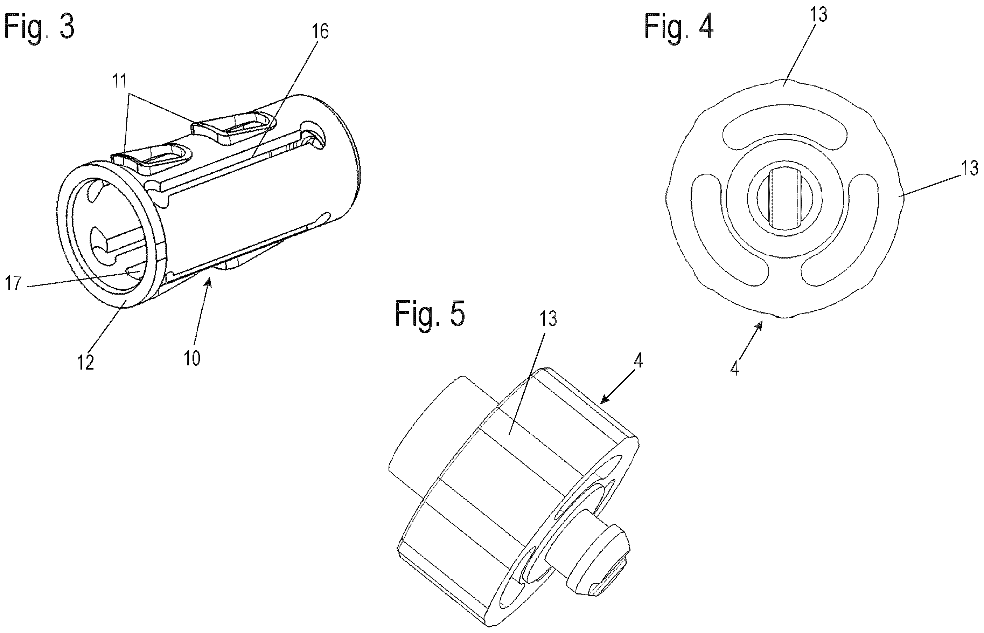

Die Hülse 10 ist als Einzelheit in der Figur 3 erkennbar, in der die Anordnung und Konfiguration der Rastzungen 11 besonders deutlich dargestellt ist.

Der Kolbenkopf 4, der in den Figuren 4 und 5 als Einzelheit abgebildet ist, weist an seiner äußeren Mantelfläche Stege 13 auf, die an der Mantelinnenfläche des Gehäuses 1 anliegen, womit eine Streuungsreduzierung bzw. eine verminderte Auslenkung des Kolbens 2 erreicht wird.

Die Formgebung der Mantelfläche des Kolbenkopfes 4 im dargestellten Beispiel kann auch in anderer Form vorgesehen sein.

In Achsrichtung der Kolbenstange 3 und dem Kolbenkopf 4 nachgeordnet ist ein Ventilplättchen 9 auf einem Ansatz des Kolbenkopfes 4 angeordnet, das den Volumenstrom bei der Betätigung des Dämpfers steuert.

In der Figur 6 sind die Montageschritte zur Montage des Dämpfers mit der Selbsteinzugseinrichtung 14 in den Schrittfolgen a) bis d) abgebildet. So ist zu erkennen, dass die Verbindungsbuchse 15 der Selbsteinzugseinrichtung 14 in die Hülse eingeschoben wird bis in eine Endstellung, erkennbar in der Figur 6d), in der sie mit der Hülse 10 verrastet ist.

Dabei hat die Verbindungsbuchse 15 zur Fixierung Rastelemente, die in Rastöffnungen 17 der Hülse 10 eingreifen. Dazu können Freimachungen unterhalb oder innerhalb der Rastzungen 11 oder zu den Rastzungen 11 versetzte Rastöffnungen auf der Hülse 10 dienen.

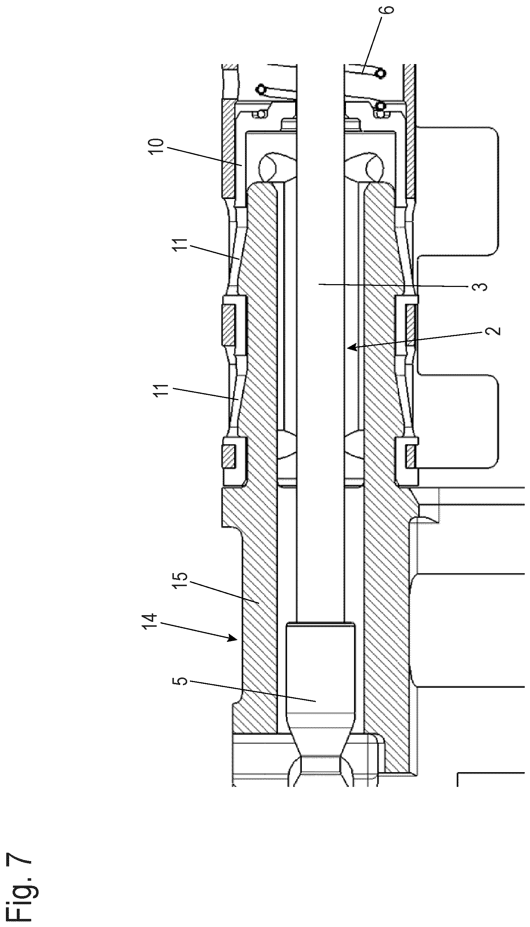

Die Figur 7 zeigt den Dämpfer 10 in Funktionsstellung an der Selbsteinzugseinrichtung 14 angeschlossen, entsprechend der Endmontagestellung nach der Figur 6d).

Hervorzuheben ist, dass durch die Hülse 10 eine Maßdifferenz der Durchmesser des Gehäuses 1 und der Verbindungsbuchse 15 der Selbsteinzugseinrichtung 14 überbrückt werden kann.

Somit können größere Dämpfer auch in kleineren Selbsteinzugseinrichtungen 14 eingesetzt werden. Die Hülse 10 bildet sowohl einen Deckel des Dämpfers und dient sozusagen als Universaladapter, wodurch die Individualisierung der Selbsteinzugseinrichtungen erst am Ende der Montage stattfinden kann.

### Bezugszeichenliste

- 1: Gehäuse
- 2: Kolben
- 3: Kolbenstange
- 4: Kolbenkopf
- 5: Anschlusselement
- 6: Druckfeder
- 7: Führungselement
- 8: Dichtung
- 9: Ventilplättchen
- 10: Hülse
- 11: Rastzungen
- 12: Kragen
- 13: Steg
- 14: Selbsteinzugseinrichtung
- 15: Verbindungsbuchse
- 16: Aussparung
- 17: Rastöffnung

## Patentansprüche

1. Dämpfer für eine Selbsteinzugseinrichtung (14) für ein bewegbares Möbelteil, mit einem Gehäuse (1), in dem ein Kolben (2) mit einer Kolbenstange (3) und einem Kolbenkopf (4) axial verschiebbar gehalten ist, wobei die Kolbenstange (3) mittels eines an dem dem Kolbenkopf (4) gegenüberliegenden Ende vorgesehenen Anschlusselements (5) mit der Selbsteinzugseinrichtung (14) verbindbar ist, **dadurch gekennzeichnet, dass** in den dem Anschlusselement (5) der Kolbenstange (3) zugewandten Endbereich des Gehäuses (1) eine mit dem Gehäuse (1) verrastete Hülse (10) eingefügt ist, die die Kolbenstange (3) umfänglich umschließt und eine Rastverbindung zur Selbsteinzugseinrichtung (14) bildet.

2. Dämpfer nach Anspruch 1, **dadurch gekennzeichnet, dass** die Hülse (10) Rastelemente aufweist, die in Rastausnehmungen des Gehäuses (1) eingreifen.

3. Dämpfer nach Anspruch 1 oder 2, **dadurch gekennzeichnet, dass** die Rastelemente als Rastzungen (11) ausgebildet sind, die derart in die Rastausnehmungen des Gehäuses (1) eingreifen, dass die Hülse (10) entgegen der Einschubrichtung fixiert ist.

4. Dämpfer nach Anspruch 3, **dadurch gekennzeichnet, dass** die Rastzungen (11) harpunenstegartig ausgebildet sind.

5. Dämpfer nach einem der vorhergehenden Ansprüche, **dadurch gekennzeichnet, dass** in der Hülse (10) eine Verbindungsbuchse (15) der Selbsteinzugseinrichtung angeordnet und mit der Hülse (10) verbunden ist, vorzugsweise durch Verrasten.

6. Dämpfer nach einem der vorhergehenden Ansprüche, **dadurch gekennzeichnet, dass** die Hülse (10) Materialschwächungen, vorzugsweise Aussparungen (16) aufweist.

7. Dämpfer nach einem der vorhergehenden Ansprüche, **dadurch gekennzeichnet, dass** die Hülse (10) Rastöffnungen (17) aufweist, in die Rastelemente der Verbindungsbuchse (15) eingreifen.

8. Dämpfer nach einem der vorhergehenden Ansprüche, **dadurch gekennzeichnet, dass** die Materialschwächungen im Überdeckungsbereich der Rastzungen (11) oder versetzt dazu angeordnet sind.

9. Dämpfer nach einem der vorhergehenden Ansprüche, **dadurch gekennzeichnet, dass** eine Druckfeder (6) vorgesehen ist, die sich einerseits an einem Führungselement (7) und andererseits am zugewandten Boden der Hülse (10) abstützt.

10. Dämpfer nach einem der vorhergehenden Ansprüche, **dadurch gekennzeichnet, dass** an der Kolbenstange (3), auf der der Druckfeder (6) abgewandten Seite des Führungselements (7) eine Dichtung (8) vorgesehen ist.

11. Dämpfer nach einem der vorhergehenden Ansprüche, **dadurch gekennzeichnet, dass** der Kolbenkopf (4) und/oder der Innenmantel des Gehäuses (1) einen unrunden Querschnitt aufweist.

12. Dämpfer nach einem der vorhergehenden Ansprüche, **dadurch gekennzeichnet, dass** die Hülse (10) auf ihrer der Druckfeder (6) gegenüberliegenden Stirnseite einen umlaufenden, radial nach außen gerichteten Kragen (12) aufweist.

13. Dämpfer nach einem der vorhergehenden Ansprüche, **dadurch gekennzeichnet, dass** der Kolbenkopf (4) umfänglich sich axial erstreckende Stege oder Abflachungen aufweist.

14. Selbsteinzugseinrichtung (14) für ein bewegbares Möbelteil mit einem Dämpfer nach einem der vorhergehenden Ansprüche.
